# EUROPÄISCHE PATENTSCHRIFT

(11) **EP 0 324 865 B1**
(45) Veröffentlichungstag und Bekanntmachung des Hinweises auf die Patenterteilung: **27.01.1993**
(21) Anmeldenummer: 88100617.5
(22) Anmeldetag: 18.01.1988
(51) Int. Cl.: B01D 25/12

(54) **Filterpresse**
Filterpress
Presse filtrante

(43) Veröffentlichungstag der Anmeldung: 26.07.1989
(73) Patentinhaber: BAUKO BAUKOOPERATION GMBH, A-5020 Salzburg (AT)
(72) Erfinder: Kupka, Dieter, D-8852 Rain/Lech (DE)
(74) Vertreter: Körner, Ekkehard, Dipl.-Ing.

(56) Entgegenhaltungen:
- EP-A- 0 226 659
- WO-A-88/00082
- US-A- 1 343 182

## Beschreibung

Die Erfindung bezieht sich auf eine Filterpresse nach dem Oberbegriff des Anspruchs 1. Eine solche Filterpresse ist aus der EP-A-0 226 659 bekannt.

Bei der bekannten Filterpresse sind in einem liegenden, im wesentlichen zylindrischen Gehäuse, das von zwei Stirnwänden und einem diese verbindenden Mantel gebildet ist, mehrere Filterplatten axial hintereinander und parallel zueinander angeordnet, und jeweils zwischen zwei Filterplatten befindet sich eine Rotorscheibe, die an einer allen Rotorscheiben gemeinsamen Welle befestigt ist, die in den Stirnwänden gelagert ist und die Filterplatten durchdringt. Die Filterplatten bestehen jeweils aus einem einstückigen Rahmen, der wenigstens einen Hohlraum zur Aufnahme von Filtrat definiert, und zwei auf beiden Seiten des Rahmens angeordneten, den Hohlraum überspannenden Filtertüchern, wobei der Rahmen und die Filtertücher eine zentrale Durchgangsöffnung für die Welle aufweisen, an deren Rand die Filtertücher und der Rahmen abgedichtet miteinander verbunden sind.

Bei dieser Filterpresse kann zur Entleerung der auf den Filterplatten aufgebautenFilterkuchen am Ende des Filtriervorgangs der Gehäusemantel gegenüber den Stirnwänden seitlich verschoben werden, sodaß der Innenraum der Filterpresse im wesentlichen freigelegt wird und mit Hilfe der Rotorscheiben, an denen vorstehende Rippen angebracht sind, die Filterkuchen von den Filterplatten abgeräumt werden und frei nach unten fallen können.

Bei Filterpressen müssen die Filtertücher in regelmäßigen Abständen gewechselt werden. Dazu ist es in aller Regel notwendig, die Filterplatten aus der Filterpresse herauszunehmen. Bei einer Filterpresse, bei der die Filterplatten einstückige Rahmen aufweisen, die von einer Welle durchdrungen sind, ist das Herausnehmen der Filterplatten zum Filtertuchwechsel unabdingbar. Bei einer solchen Filterpresse, wie in der o.g. EP-A-0 226 659 beschrieben, erfordert dies eine Demontage der Rotorwelle, die aus dem genannten Grunde aus einer Vielzahl miteinander leicht lösbar verbundener kurzer Teilstücke bestehen muß. Es versteht sich, daß das Zerlegen der Rotorwelle zum Zwecke des Filtertuchwechsels eine relativ aufwendige Arbeit ist, die längere Stillstandszeiten der Filterpresse erfordert und daher die Wirtschaftlichkeit beeinträchtigt.

Aus der US-A 1 343 182 ist ein Filterapparat bekannt, bei dem mehrere Filterscheiben in gegenseitigem Abstand zueinander auf einem zentralen Rohr angeordnet sind, das sich durch ein geschlossenes Gehäuse erstreckt, das geöffnet werden kann. Das Rohr ist in dem Gehäuse drehbar gelagert und dient der Filtratabführung. Die Filterscheiben bestehen jeweils aus zwei in einer Durchmesserlinie geteilten Halbscheiben, die an Halbflanschen befestigt sind, die an dem Rohr mittels Schrauben festgespannt sind und Filtratdurchlässe aus den Filterscheiben in das Rohr aufweisen. Durch Lösen dieser Schrauben können die Halbscheiben einer Filterplatte bei geöffnetem Gehäuse unabhängig von anderen Filterplatten vom Rohr abgenommen werden.

Der Erfindung liegt die Aufgabe zugrunde, eine Filterpresse der eingangs genannten Art anzugeben, bei der ein Filtertuchwechsel auf einfache Weise möglich ist und insbesondere keine Demontage der Rotorwelle erfordert.

Diese Aufgabe wird durch die kennzeichnenden Merkmale des Anspruchs 1 gelöst. Vorteilhafte Ausgestaltungen der Erfindung sind Gegenstand der Unteransprüche.

Bei der erfindungsgemäßen Filterpresse wird es möglich, nach Öffnen des Gehäuses, wenn die Filterplatten zugänglich geworden sind, diese derart zu zerlegen, daß die die Filtertücher tragenden Filterplattensegmente aus der Filterpresse herausgenommen werden können, ohne daß die Rotorwelle demontiert werden muß. Gemäß der Erfindung bestehen die Filterplatten jeweils aus einem im wesentlichen kreisförmig geschlossenen, jedoch mit einem Radialschlitz versehenen Filterplattensegment und einem in dem Radialschlitz angeordneten Füllkörper, wobei der Radialschlitz eine Breite aufweist, die wenigstens so groß wie der Durchmesser der Rotorwelle ist, und der Füllkörper auf dem wenigstens einen Rohr abgestützt ist, wobei das Rohr im wesentlichen lotrecht unter der Rotorwelle liegt. Es ist daher auf sehr einfache Weise möglich, das Filterplattensegment nach Öffnen der Filterpresse nach oben aus der Filterpresse herauszuheben.

Die Erfindung ermöglicht es in vorteilhafter Weise auch, die Rotorwelle zwischen den beiden Stirnwänden zusätzlich abzustützen. Zu diesem Zweck ist der auf dem genannten Rohr abgestützte Füllkörper im Bereich der Welle mit einem Wellenlager versehen. In der Praxis genügt es, je nach Länge der Rotorwelle, diese nur an wenigen Stellen zwischen den Stirnwänden, insbesondere nur in der Mitte zwischen den Stirnwänden, auf die vorgenannte Weise abzustützen. Es ist besonders vorteilhaft, daß der Füllkörper beim Wechseln der Filtertücher nicht mit ausgebaut zu werden braucht.

Weitere Merkmale der Erfindung beziehen sich auf Einrichtungen zur Befestigung der Filtertücher an den Rahmen der Filterplatten, die einen einfachen Wechsel der Filtertücher nach dem Herausnehmen der Filterplatten segmente aus der Filterpresse ermöglichen.

Die Erfindung wird nachfolgend unter Bezugnahme auf die Zeichnungen näher erläutert. Es zeigt:
- Fig. 1: eine schematische Darstellung einer Filterpresse mit Merkmalen der Erfindung von der Seite;
- Fig. 2: einen Schnitt durch die Filterpresse nach Fig. 1 längs der Linie II-II von Fig. 1, eine erste Ausführungsform einer Filterplatte zeigend;
- Fig. 3: im Ausschnitt eine vergrößerte Axialschnittdarstellung durch die Rotorwelle im Bereich einer Abstützung derselben zwischen den Stirnwänden der Filterpresse, und
- Fig. 4: eine Ausschnittsdarstellung von der Seite, die axial schwimmende Abstützung der Filterplatten an einer Stützzarge zeigend.

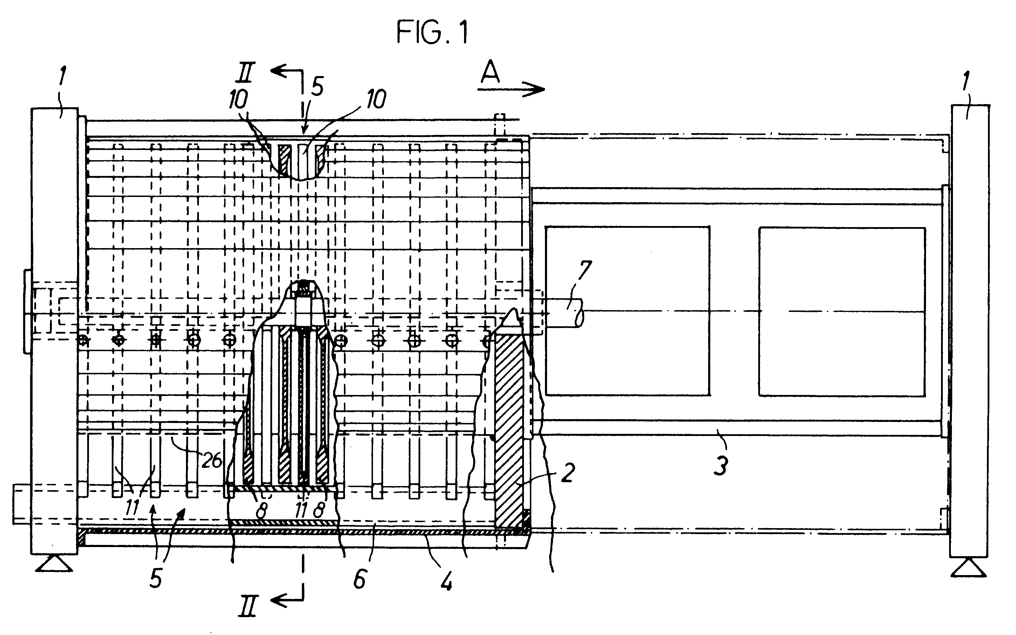

Fig. 1 zeigt schematisch eine Filterpresse, deren prinzipieller Aufbau in der genannten EP-A-0 226 659 detailliert erläutert ist. Auf die dort angegebene Beschreibung kann daher an dieser Stelle Bezug genommen werden. Diese Filterpresse besteht aus zwei aufrecht stehenden Seitenrahmenplatten 1, von denen die linke Rahmenplatte 1 zugleich eine Gehäusestirnwand bildet, einer etwa in der Mitte zwischen den beiden Seitenrahmenplatten 1 angeordneten Stirnwand 2, die an der rechten Seitenrahmenplatte 1 mittels eines die Distanz überspannenden Käfigs 3 abgestützt ist, und einem zwischen der linken Seitenrahmenplatte 1 und der Stirnwand 2 angeordneten, im wesentlichen zylindrischen Gehäusemantel 4, der in axialer Richtung nach rechts in Richtung auf die rechte Seitenrahmenplatte 1 verschiebbar ist, wie durch den Pfeil A angegeben. In dem von der linken Seitenrahmenplatte 1, der Seitenwand 2 und dem Gehäusemantel 4 umschlossenen Kammerraum sind in axialer Richtung hintereinander mehrere Filterplatten 5 parallel zueinander angeordnet, die auf einem im unteren Bereich die Filterkammer achsparallel durchziehenden Rohr 6 sowie an sich in der Kammer in Achsrichtung erstreckenden Stützzargen 26, diespäter noch beschrieben werden, abgestützt sind. Die Filterplatten 5 weisen im wesentlichen kreisförmige Gestalt auf und sind in der Mitte von einer Rotorwelle 7 durchdrungen, die in der linken Rahmenplatte 1 und in der Stirnwand 2 gelagert ist und zwischen jeweils zwei benachbarten Filterplatten 5 eine Rotorscheibe 8 drehfest trägt. Die Rotorscheiben dienen der Erzeugung eines Querstroms während des Filtervorgangs zur Verhinderung einer vorzeitigen Verstopfung von auf den Filterplatten 5 aufgespannten Filtertüchern, der Vergleichmäßigung des Filterkuchenaufbaus auf den Filtertüchern, dem Pressen der Filterkuchen am Ende des Filtervorgangs und dem Abräumen der Filterkuchen von den Filterplatten nach Öffnen der Filterpresse. Die Filterplatten 5 weisen Hohlräume auf, die von den erwähnten Filtertüchern abgedeckt sind, zur Aufnahme des Filtrats, die mit dem Innenraum des Stützrohrs 6 verbunden sind, das zugleich als Filtratablaß dient.

Die mit der Rotorwelle 7 verbundenen Antriebseinrichtungen für die Rotorwelle und für die Erzeugung von Preßwirkungen mit Hilfe der Rotorscheiben 8 sind hier aus Übersichtlichkeitsgründen nicht dargestellt. Zur Erläuterung dieser Einrichtungen kann auf die schon erwähnte EP-A-0 226 659 verwiesen werden.

Der insoweit beschriebene Aufbau der Filterpresse nach Fig. 1 entspricht dem in der vorgenannten Druckschrift.

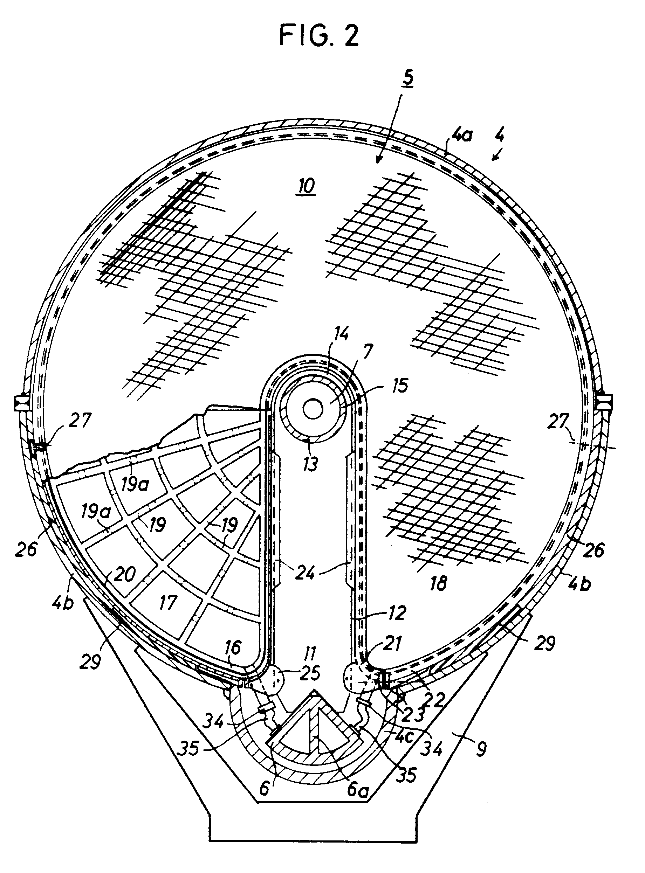

Fig. 2 zeigt einen Schnitt längs der Linie II-II von Fig. 1 durch die Filterpresse mit einer Filterplatte 5 gemäß einem ersten Ausführungsbeispiel der Erfindung. Man erkennt in Fig. 2 einem im wesentlichen zylindrischen Gehäusemantel 4, der aus einer oberen, etwa halbkreisförmigen Halbschale 4a und zwei unteren etwa viertelkreisförmigen Schalen 4b etwas größeren Durchmessers besteht, wobei die beiden unteren Schalen 4b im Bereich ihrer unteren Enden voneinander Abstand haben und ihre einander zugewandten Ränder durch ein Halbrohr 4c miteinander verbunden sind, das an den Viertelkreisschalen 4b angeschweißt ist und der Aufnahme des erwähnten Stützrohrs 6 dient. Die beiden Viertelkreisschalen 4b des Mantels 4 sind an der oberen Halbschale 4a mittels einer Schweißverbindung befestigt und sind unten von einem Tragrahmen 9 abgestützt, der in Achsrichtung der Filterpresse in Richtung des Pfeiles A (Fig. 1) hin und her verschiebbar ist.

Man erkennt in Fig. 2 ferner eine Filterplatte 5, die aus einem im wesentlichen kreisförmig geschlossenen Filterplattensegment 10 und einem Füllkörper 11 gebildet ist. Der Füllkörper 11 sitzt in einem im Filterplattensegment 10 ausgebildeten, radial verlaufenden Schlitz 12 des Filterplattensegments 10, der eine Breite aufweist, die größer ist, als der Durchmesser der Rotorwelle 7. Der Füllkörper 11 weist eine Dicke auf, die etwa der des Filterplattensegments 10 entspricht und dient dazu, ein Zusetzen des Schlitzes 12 mit Filterkuchen während des Filtriervorgangs zu verhindern. Der Schlitz 12 endet an seinem oberen Ende halbkreisförmig und erstreckt sich über die Rotorwelle 7 hinaus.

Der Füllkörper 11 ist an seinem unteren Ende auf dem Stützrohr 6 abgestützt, das im vorliegenden Beispiel einen etwa dreieckförmigen Querschnitt aufweist, von dem der untere Schenkel kreisbogenförmig verläuft und mit der oberen Spitze des Dreieckquerschnitts mit einem Versteifungssteg 6a verbunden ist. Am oberen Ende weist der Stützkörper 11 eine etwa halbkreisförmige Auskehlung 13 auf, in der sich die Rotorwelle 7 erstreckt. Nach oben schließt sich an den Füllkörper 11 ein etwa halbkreisförmiger Bügel 14 an, der die Rotorwelle 7 umgibt und ggf. auch entfallen kann.

Im dargestellten Beispiel dient der Füllkörper 11 zugleich der Zwischenabstützung der Rotorwelle 7, wie auch in dem weggebrochenen Abschnitt in Fig. 1 erkennbar. Er nimmt in diesem Falle in der Auskehlung 13 ein Rollen- oder Gleitlager 15 auf, in welchem die Rotorwelle 7 drehbar gelagert ist. Ist ein Bügel 14 vorhanden, umspannt dieser das Rollen- oder Gleitlager 15 auf seiner Oberseite.

Das Filterplattensegment 10 besteht aus einem Rahmen 16, der einen Hohlraum 17 umschließt, der beiderseits von Filtertüchern 18 abgedeckt ist, von denen eines in Fig. 2 erkennbar und durch eine Kreuzschraffur hervorgehoben ist. Der Rahmen 16 ist durch kreisbogenförmig und radial verlaufende Rippen 19 ausgesteift, die zugleich die Filtertücher von der Rückseite abstützen und mit Filtratdurchlässen 19a versehen sind. Am Umfangsrand und an den den Schlitz 12 begrenzenden Rändern sind in die in den Radialebenen verlaufenden Flächen des Rahmens 16 beidseitig Nuten ausgebildet, in denen jeweils ein elastischer O-Ring 20 angeordnet ist. Die Filtertücher 18 liegen über den O-Ringen 20 und werden an dem Rahmen 16 von einer aus zwei Teilen 21 und 22 bestehenden Schelle gehalten, die einen im wesentlichen U-förmigen Querschnitt hat, deren Außenschenkel die Filtertücher 18 jeweils zwischen sich und dem zugehörigen O-Ring 20 einklemmen. Das Schellenteil 21 verläuft im Bereich des Schlitzes 12 und hat eine in Seitenansicht etwa U-förmige Gestalt, während das Schellenteil 22 etwa die Form eines offenen Ringes hat. Die Enden der Schellenteile 21 und 22 sind mit Flanschen 23 versehen, an denen die Schellenteile mit Schraubbolzen (nicht dargestellt) miteinander verspannt werden können.

An dem dem Schlitz 12 benachbarten Schellenteil 21 sind an der dem Füllkörper 11 zugewandten Seite Führungseinrichtungen in Form von Schienen 24 befestigt, die sich links und rechts und zu beiden Seiten des Füllkörpers 11 erstrecken und zwei gegenüberliegende Randbereiche desselben zwischen sich sandwichartig einschließen. Am unteren Ende des Schellenteils 21 sind sich gegen den Füllkörper 11 erstreckende Laschen 25 ausgebildet, durch die Schraubbolzen (nicht dargestellt) geschraubt sein können, mittels denen der Füllkörper 11 an dem Schellenteil 21 und somit an dem Filterplattensegment 10 festgelegt werden kann. Es versteht sich, daß die Schienen 24 und Laschen 25 statt dessen auch an dem Füllkörper 11 befestigt sein können und das Filterplattensegment im Bereich des Schlitzes 12 zwischen sich sandwichartig einschließen.

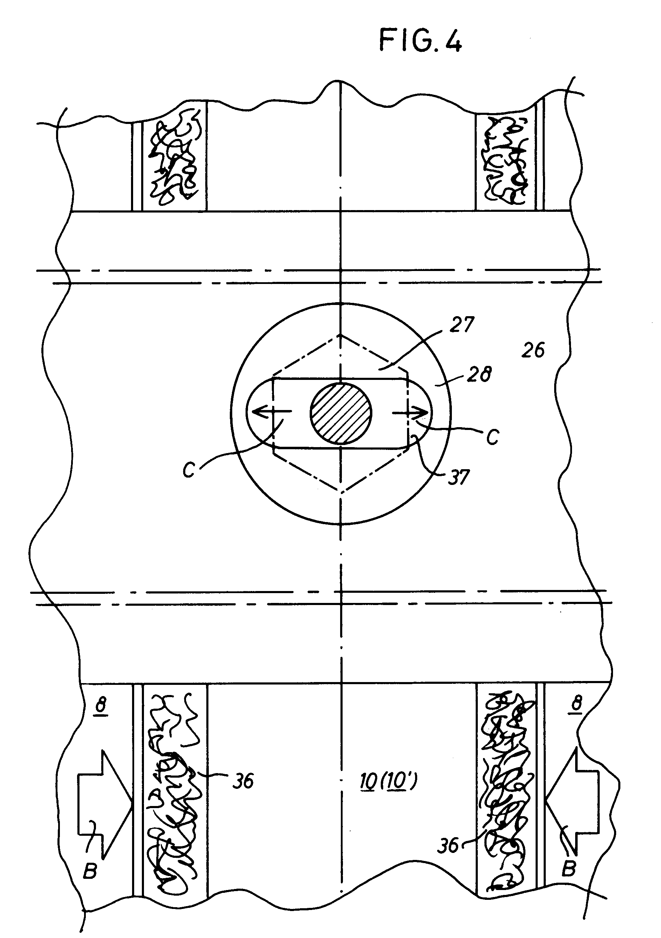

Man erkennt in Fig. 2 ferner im unteren Bereich der Filterpresse zwei Stützzargen 26, die an der linken Tragplatte 1 und der Stirnwand 2 befestigt sind (Fig. 1) und gegenüber den unteren Viertelschalen 4b des Mantels 4 einen geringen Abstand haben, um ein Verschieben des Gehäusemantels 4 nicht zu behindern. An diesen Stützzargen ist jedes Filterplattensegment 10 mittels Schraubbolzen 27 abgestützt, deren Kopf jeweils in einer Vertiefung 28 in der Stützzarge 26 angeordnet ist (Fig. 4), und die jeweils in den Rahmen eingeschraubt sind. In Fig. 2 ist auf der linken Seite der Schraubbolzen 27 vollständig, auf der rechten Seite nur angedeutet dargestellt. Die Stützzargen 26 erstrecken sich jeweils nur über einen Teilbereich der unteren Viertelschalen 4b des Gehäusemantels 4, und zwar vorzugsweise im oberen Bereich derselben. Unten schließt sich an die Stützzargen 26 jeweils ein Füllbelag 29 an, der aus Gummi oder einem Plastikmaterial bestehen kann und auf die jeweilige Viertelschale 4b aufgeklebt ist. Diese Füllbeläge 29 sollen ein Absetzen von Filterrückstand im unteren Bereich des Gehäusemantels verhindern.

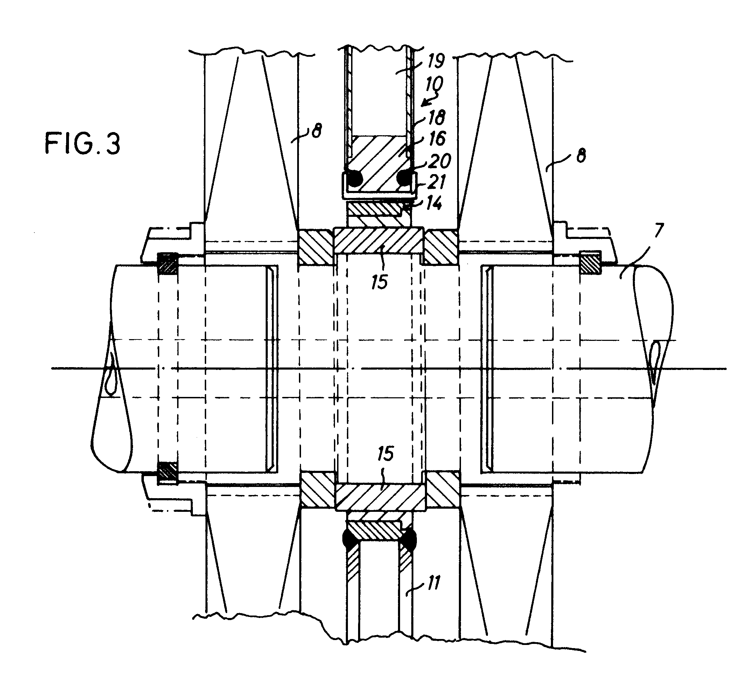

Fig. 3 zeigt im Ausschnitt einen Axialschnitt durch die Filterpresse nach Fig. 1 im Bereich der Abstützung der Rotorwelle 7 durch einen Füllkörper 11. Man erkennt in Fig. 3 eine aus mehreren Teilstücken bestehende Rotorwelle 7, wobei auf jedes Teilstück eine Rotorscheibe 8 drehfest aufgespannt ist. Zwischen den zwei gezeigten Rotorscheiben 8 ist ein Filterplattensegment 10 und unten ein Füllkörper 11 angeordnet. Ferner erkennt man einen Gleitlagerring 15, der von dem Füllkörper 11 abgestützt ist und oben von dem schon beschriebenen Bügel 14 gehalten ist. Der Gleitlagerring umgibt die Rotorwelle 7 und stützt diese drehbar ab. Ferner erkennt man in Fig. 3 den Rahmen 16 des Filterplattenelements 10 mit den darin eingelegten O-Ringen 20, die von dem Rahmen 16 gehaltenen Filtertücher 18, eine Stützrippe 19 und das Schellenteil 21, das die Filtertücher 18 mittels der O-Ringe 20 an dem Rahmen 16 festspannt.

Im Betrieb kann es vorkommen, daß sich auf den beiden Filtertüchern einer Filterplatte ungleich dicke Filterkuchen 36 (Fig. 4) aufbauen, beispielsweise infolge ungleicher Filtriereigenschaften der beiden auf der Filterplatte befestigten Filtertücher. Um zu vermeiden, daß beim mechanischen Auspressen der Filterkuchen mit Hilfe der Rotorplatten, was in Fig. 4 mit den Pfeilen B angedeutet ist, an der Filterplatte in axialer Richtung nicht ausgeglichene Kräfte auftreten, sind die Filterplatten in der Filterpresse vorteilhafterweise in axialer Richtung in gewissem Umfang beweglich angeordnet. Diese Beweglichkeit wird ermöglicht, indem die Durchgangslöcher 37 in den Stützzargen 26 als Langlöcher ausgeführt sind, wie in Fig.4 gezeigt, und die Schraubbolzen 27 nicht so fest angezogen sind, daß die Filterrahmen 16 an den Stützzargen 26 völlig festgespannt sind. Es versteht sich ferner, daß die Abstützung des Füllkörpers 11 (Fig. 2) auf dem Stützrohr 6 in diesem Falle in axialer Richtung beweglich ist. Diese axiale Beweglichkeit in gewissen Umfange ist in Fig. 4 durch die Pfeile C angedeutet.

Das Auswechseln der Filterplatten 5 vollzieht sich bei der erfindungsgemäßen Filterpresse in folgender Weise. Zunächst wird die Filterpresse durch Verschieben des zylindrischen Gehäusemantels 4 in Richtung des Pfeiles A geöffnet. Die Filterplatten 5 und ihre Verbindungen mit dem Stützrohr 6 sind dann frei zugänglich. Sodann werden die Schraubbolzen 27 und die Verbindungsschläuche 35 an den Auslässen 34 gelöst. Es werden dann die an den Haltelaschen 25 ggf. vorhandenen Schraubbolzen gelöst. Sodann können die Filterplattensegmente 10 nach oben über die Rotorwelle 7 herausgehoben werden. Nach Lösen der Schellenteile 21 und 22 voneinander können dann die Filtertücher 18 von den Rahmen 16 abgenommen und durch neue Filtertücher ersetzt werden. Der Zusammenbau erfolgt in umgekehrter Reihenfolge.

Es sei schließlich angemerkt, daß in ein und derselben Filterpresse Filterplatten mehrerer der hier beschriebenen Arten nebeneinander verwendet werden können. So kann beispielsweise vorgesehen sein, daß Füllkörper mit Wellenlager nur dort verwendet werden, wo die Welle abzustützen ist, während bei den übrigen Filterplatten die Füllkörper ohne Wellenlager ausgebildet sind.

## Patentansprüche

1. Filterpresse, umfassend ein Gehäuse aus im wesentlichen aufrecht stehenden Stirnwänden (1,2) und einem zwischen den Stirnwänden (1,2) angeordneten, mit diesen abgedichtet verbundenen, im wesentlichen zylindrischen Mantel (4), mehreren koaxial zur Gehäuseachse hintereinander angeordneten, zu einander parallelen Filterplatten (5), die jeweils wenigstens einen beidseitig von Filtertüchern (18) abgedeckten Hohlraum (17) aufweisen und auf wenigstens einem im unteren Bereich des Gehäuses innerhalb des Mantels (4) zwischen den Stirnwänden (1,2) verlaufenden Rohr (6) abgestützt sind, und einem koaxial in dem Gehäuse angeordneten Rotor aus einer in der Gehäuseachse verlaufenden, in den Stirnwänden (1,2) drehbar gelagerten, die Filterplatten (5) in der Mitte durchdringenden Welle (7) und mehreren auf der Welle (7) drehfest angebrachten Rotorscheiben (8), von denen jeweils eine zwischen zwei benachbarten Filterplatten (5) angeordnet ist, **dadurch gekennzeichnet,** daß jede Filterplatte (5) aus einem im wesentlichen kreisförmig geschlossenen, mit einem Radialschlitz (12) versehenen Filterplattensegment (10) besteht, daß in dem Radialschlitz (12) ein Füllkörper (11) angeordnet ist sowie der Radialschlitz (12) eine Breite aufweist, die wenigstens so groß wie der Durchmesser der Welle (7) ist, und der Füllkörper (11) auf dem Rohr (6) abgestützt ist, wobei das Rohr (6) im wesentlichen lotrecht unter der Welle (7) liegt.

2. Filterpresse nach Anspruch 1, **dadurch gekennzeichnet,** daß der Füllkörper (11) und das Filterplattensegment (10) an ihren einander zugewandten, etwa radial verlaufenden Rändern mit zusammenwirkenden Führungseinrichtungen (24) versehen sind, die ein gleitendes Führen des Filterplattensegments (10) an dem Füllkörper (11) beim Heraus- und Hineinheben des Filterplattensegments (10) aus der bzw. in die Filterpresse bewirken und das Filterplattensegment (10) und den Füllkörper (11) im Betrieb in axialer Richtung aneinander festlegen.

3. Filterpresse nach einem der vorhergehenden Ansprüche, **dadurch gekennzeichnet,** daß die Filterplatten (5) an weiteren Halteeinrichtungen (26,27) abgestützt sind, die sich Zwischen den Stirnwänden (1,2) des Gehäuses erstrecken.

4. Filterpresse nach einem der vorhergehenden Ansprüche, **dadurch gekennzeichnet,** daß von den Füllkörpern (11) wenigstens einer an seinem oberen Ende mit einer Wellenlagereinrichtung (15) versehen ist, mittels der die Welle (7) radial abgestützt ist.

5. Filterpresse nach Anspruch 4, **dadurch gekennzeichnet,** daß der mit der Wellenlagereinrichtung (15) versehene Füllkörper (11) etwa in der Mitte zwischen den Stirnwänden (1,2) des Gehäuses angeordnet ist.

6. Filterpresse nach Anspruch 4, **dadurch gekennzeichnet,** daß bei Vorhandensein mehrerer mit Wellenlagereinrichtungen (15) versehener Füllkörper (11) diese in gleichmäßiger Verteilung in der Filterpresse angeordnet sind.

7. Filterpresse nach einem der vorhergehenden Ansprüche, **dadurch gekennzeichnet,** daß das Rohr (6) ein Ablaufrohr ist, das mit den Hohlräumen (17) der Filterplatten (5) in Strömungsverbindung steht.

8. Filterpresse nach einem der vorhergehenden Ansprüche, **dadurch gekennzeichnet,** daß das Rohr (6) einen etwa dreieckigen Querschnitt aufweist, von dem eine Spitze nach oben weist.

9. Filterpresse nach einem der vorhergehenden Ansprüche, **dadurch gekennzeichnet,** daß die Filterplatten (5) innerhalb des Gehäuses in axialer Richtung beschränkt beweglich gehalten sind.

10. Filterpresse nach einem der Ansprüche 7 bis 9, **dadurch gekennzeichnet,** daß die Filterplatten (5) mittels lösbarer, flexibler Leitungen (35) mit dem Ablaufrohr (6) verbunden sind.

11. Filterpresse nach einem der vorhergehenden Ansprüche, **dadurch gekennzeichnet,** daß jedes Filterplattensegment (10) einem, Rahmen (16;) aufweist, der jeweils an den den Hohlraum (17) umgebenden, jeweils in einer Radialebene verlaufenden Randflächen mit einer Nut versehen ist, in die ein elastischer O-Ring (20) eingelegt ist, und daß die Filtertücher (18) sich jeweils den O-Ring (20) erstrecken, und daß um den Umfang des Rahmens (16) eine geteilte Schelle (21,22) von im wesentlichen U-förmigem Querschnitt mit zwei Außenschenkeln und einem Verbindungssteg angeordnet ist und die Filtertücher (18) jeweils zwischen dem O-Ring (20) und dem benachbarten Außenschenkel der Schelle (21,22) eingespannt sind.

## Claims

1. Filter press, comprising a housing consisting of substantially vertically arranged end walls (1, 2) and of a substantially cylindrical shell (4) arranged between said end walls (1, 2) and sealingly connected thereto, and a plurality of plates (5) arranged parallely to each other and coaxially with the housing axis one behind the other, each comprising at least one hollow chamber (17) covered on both sides by a filter tissue (18), said filter plates being supported by at least one tube (6) extending in the lower area of the housing within the shell (4) between the front walls (1, 2), and a rotor arranged arranged coaxially in the housing and comprising a shaft (7) extending in the housing axis and rotatably supported in the end walls (1, 2) and penetrating the filter plates (5) in the center thereof, and a plurality of rotor disks (8) arranged on the shaft (7) for co-rotation therewith, each of which being mounted between two adjacent filter plates (5), characterized in that
each filter plate (5) consists of a filter plate segment (10) which is fromed of an essentially closed circular plate and is provided with a radial slot (12), that a filling body (11) is arranged in the radial slot (12) and that the radial slot (12) has a width which is at least as large as the diameter of the shaft (7), and that the filling body (11) is supported on the tube (6), with the tube (6) being essentially located vertically below the shaft (7).

2. Filter press according to claim 1, characterized in that the filling body (11) and the filter plate segment are provided with interconnecting guide means (24) at their rims facing each other and extending approximately radially, effecting a sliding guide of the filter plate segment (10) at the filling body (11) when lifting off and lowering in the filter plate segment (10) of and in the filter press, respectively and secure the filter plate segment (10) and the filling body (11) to each other in axial direction in operation of the press.

3. Filter press according to one of the preceding claims, characterized in that the filter plates (5) are supported by further support means (26, 27) extending between the end walls (1, 2) of the housing.

4. Filter press according to one of the preceding claims, characterized in that at least one of the filling bodies (11) is provided at its upper end with a shaft bearing means (15) by which the shaft (7) is radially supported.

5. Filter press according to claims 4, characterized in that the filling body (11) having the shaft bearing means (15) is arranged approximately in the center between the end walls (1, 2) of the housing.

6. Filter press according to claim 4, characterized in that in case of presence of a plurality of filling bodies (11) having shaft bearing means (15), those filling bodies (11) are regularly distributed in the filter press.

7. Filter press according to one of the preceding claims, characterized in that the tube (6) is a discharge tube in fluid connection with the hollow chamber (17) of the filter plates (5).

8. Filter press according to one of the preceding claims, characterized in that the tube (6) has an approximately triangular cross-section of which one apex extends upwardly.

9. Filter press according to one of the preceding claims, characterized in that the filter plates (5) are supported within the housing in an axially restrictedly movable manner.

10. Filter press according to one of claims 7 to 9, characterized in that the filter plates (5) are connected to the discharge tube by means of removable, flexible lines (35).

11. Filter press according to one of the preceding claims, characterized in that each filter plate segment (19) comprises a frame (16) provided with a groove at the rim faces surrounding the hollow chamber (17) and extending in a radial plane, an elastic O-ring (20) being inserted therein, and that the filter tissues (18) each extend across the O-ring (20), and that a divided strap (21, 22) of essentially U-like cross-section having two outer legs and a connecting web is arranged about the circumference of the frame (16), and that each of the filter tissues (18) is clamped between the O-ring (20) and the adjacent outer leg of the strap (21, 22).

## Revendications

1. Filtre-presse , comportant un carter formé de parois frontales (1, 2) orientées sensiblement verticalement et d'une enveloppe (4) sensiblement cylindrique, disposée entre les parois frontales (1, 2) et reliée de façon étanche à celles-ci, plusieurs plaques de filtrage (5) mutuellement parallèles, disposées l'une après l'autre coaxialement par rapport à l'axe du carter, comportant chacune au moins une cavité (17) recouverte des deux côtés par des toiles de filtrage (18) et soutenues par au moins un tube (6) disposé dans une zone inférieure du carter à l'intérieur de l'enveloppe (4) entre les parois frontales (1, 2), le filtre-presse comprenant en outre un rotor disposé coaxialement dans le carter et se composant d'un arbre (7) aligné sur l'axe du carter, monté à rotation dans les parois frontales (1, 2) et traversant les plaques de filtrage (5) au milieu, et de plusieurs disques (8) fixés sur l'arbre (7) et qui sont chacun disposés entre deux plaques de filtrage (5) adjacentes, caractérisé en ce que chaque plaque de filtrage (5) se compose d'un segment (10) de forme sensiblement circulaire fermée et pourvu d'une fente radiale (12), en ce qu'un corps de remplissage (11) est disposé dans la fente radiale (12), qui a une largeur au moins aussi grande que le diamètre de l'arbre (7), et en ce que le corps de remplissage (11) est soutenu par le tube (6), qui est situé sensiblement verticalement en dessous de l'arbre (7).

2. Filtre-presse selon la revendication 1, caractérisé en ce que le corps de remplissage (11) et le segment (10) de plaque de filtrage sont pourvus, sur leurs bords dirigés l'un vers l'autre et orientés à peu près radialement, de dispositifs de guidage (24) coopérants, qui assurent un guidage avec glissement du segment (10) de plaque de filtrage sur le corps de remplissage (11) lors de mouvements de sortie et de rentrée du segment (10) de plaque de filtrage par rapport au filtre-presse et qui fixent axialement l'un contre l'autre le segment (10) de plaque de filtrage et le corps de remplissage (11) en service.

3. Filtre-presse selon une des revendications précédentes, caractérisé en ce que les plaques de filtrage (5) sont soutenues par d'autres dispositifs de maintien (26, 27), qui sont situés entre les parois frontales (1, 2) du carter.

4. Filtre-presse selon une des revendications précédentes, caractérisé en ce que, parmi les corps de filtrage (11), au moins un est pourvu à son extrémité supérieure d'un dispositif (15) d'appui d'arbre, a l'aide duquel l'arbre (7) est soutenu radialement.

5. Filtre-presse selon la revendication 4, caractérisé en ce que le corps de remplissage (11), pourvu du dispositif (15) d'appui d'arbre, est disposé à peu près au milieu entre les parois frontales (1, 2) du carter.

6. Filtre-presse selon la revendication 4, caractérisé en ce que, lors de l'existence de plusieurs corps de filtrage (11), pourvus de dispositifs (15) d'appui d'arbre, ces corps sont répartis uniformément dans le filtre-presse.

7. Filtre-presse selon une des revendications précédentes, caractérisé en ce que le tube (6) est un tube de décharge, qui est en communication d'écoulement avec les cavités (17) des plaques de filtrage.

8. Filtre-presse selon une des revendications précédentes, caractérisé en ce que le tube (6) a une section sensiblement triangulaire, dont un sommet est dirigé vers le haut.

9. Filtre-presse selon une des revendications précédentes, caractérisé en ce que les plaques de filtrage (5) sont maintenues à l'intérieur du carter avec limitation de mouvement en direction axiale.

10. Filtre-presse selon une des revendications 7 à 9, caractérisé en ce que les plaques de filtrage (5) sont reliées au tube de décharge (6) au moyen de conduits (35) flexibles et séparables.

11. Filtre-presse selon une des revendications précédentes, caractérisé en ce que chaque segment (10) de plaque de filtrage comporte un châssis (16), qui est respectivement pourvu, sur les surfaces marginales entourant la cavité (17) et situées respectivement dans un plan radial, d'une rainure dans laquelle est disposée une bague torique élastique (20), en ce que les toiles de filtrage (18) s'étendent respectivement au-dessus de la bague torique (20) et en ce qu'il est prévu, sur le pourtour du châssis (16), une bride divisée (21, 22) ayant une section sensiblement en forme de U et comportant deux branches extérieures et une âme de liaison, et les toiles de filtrage (18) sont respectivement serrées entre la bague torique (20) et la branche extérieure adjacente de la bride (21, 22).
